# EUROPÄISCHE PATENTANMELDUNG

(11) **EP 1 304 258 A2**
(43) Veröffentlichungstag der Anmeldung: **23.04.2003**
(21) Anmeldenummer: 02023195.7
(22) Anmeldetag: 16.10.2002
(51) Int. Cl.: B60P 3/025

(54) **Mobile Kücheneinheit für die Einsatzverpflegung sowie Fahrzeugeinheit mit einer solchen Kücheneinheit**

(30) Priorität: 20.10.2001 DE 20117253 U; 13.11.2001 DE 20118360 U; 18.09.2002 DE 10243173
(71) Anmelder: Körper, Karl-Heinz, 93053 Regensburg (DE)
(72) Erfinder: Körper, Karl-Heinz, 93053 Regensburg (DE)
(74) Vertreter: Graf, Helmut, Dipl.-Ing.

(57) **Zusammenfassung**

Eine mobile Kücheneinheit für eine Einsatzverpflegung (Cook + Chill) ist gekennzeichnet durch einen mobilen bzw. auf einem Fahrzeug oder Anhängerrahmen vorgesehenen Aufbau, in dem wenigstens ein Küchenraum mit verschiedenen, elektrisch betriebenen Geräten sowie ein Raum zur Aufnahme eines Versorgungs-Aggregates gebildet sind.

## Beschreibung

Die Erfindung bezieht sich auf eine mobile Kücheneinheit gemäß Oberbegriff Patentanspruch 1 sowie auf eine Fahrzeugeinheit gemäß Oberbegriff Patentanspruch 10.

Unter "Einsatzverpflegung" wird im Sinne der Erfindung eine Verpflegung einer größeren Anzahl von Personen verstanden, die sich im mobilen Einsatz befinden, d. h. beispielsweise die Verpflegung von Polizei-, Ordnungs- und/oder Hilfskräften im mobilen Einsatz an einem Einsatzort. Unter mobiler Kücheneinheit wird im Sinne der Erfindung eine mobile Küche verstanden, die zumindest die Fertigstellung und Ausgabe von in einer räumlich entfernten stationären Küche vorbereiteter oder vorgekochter Einsatzverpflegung (Cook + Chill) am Einsatzort ermöglicht.

Aufgabe der Erfindung ist es, eine Kücheneinheit sowie Fahrzeugeinheit aufzuzeigen, mit der eine mobile Einsatzverpflegung in optimaler Weise und unter Berücksichtigung auch aller hygienischen Erfordernisse möglich ist. Zur Lösung dieser Aufgabe sind eine mobile Kücheneinheit entsprechend dem Patentanspruch 1 sowie eine Fahrzeugeinheit entsprechend dem Patentanspruch 10 ausgebildet.

Die erfindungsgemäße Fahrzeugeinheit zur Einsatzverpflegung besteht aus dem Motorfahrzeug, welches bevorzugt von einem herkömmlichen Lkw ist, der als Kühlfahrzeug mit einem geschlossenen Aufbau ausgebildet ist, sowie aus dem Anhänger, der mit seinem Aufbau die völlig autark arbeitende Kücheneinheit bildet.

Bei einem Einsatz wird der Anhänger mit dem Motorfahrzeug an den Einsatzort bewegt, dort abgestellt und mittels Nivelliereinrichtung, beispielsweise über Spindelwinden dauerhaft waagrecht gestellt. Das Motorfahrzeug dient dann zum Anliefern der vorbereiteten und gekühlten Nahrungsmittel bzw. Speisen, die im gekühlten Zustand etwa drei Tage haltbar sind und zum Rückführen von Leergut, insbesondere auch zum Rückführen der zur Anlieferung der Einsatzverpflegung verwendeten Regalwagen, von Geschirr usw. an eine stationäre, räumlich entfernte Küche.

Weiterbildungen der Erfindung sind Gegenstand der Unteransprüche. Die Erfindung wird im folgenden anhand der Figuren an einem Ausführungsbeispiel näher erläutert.
Es zeigen:

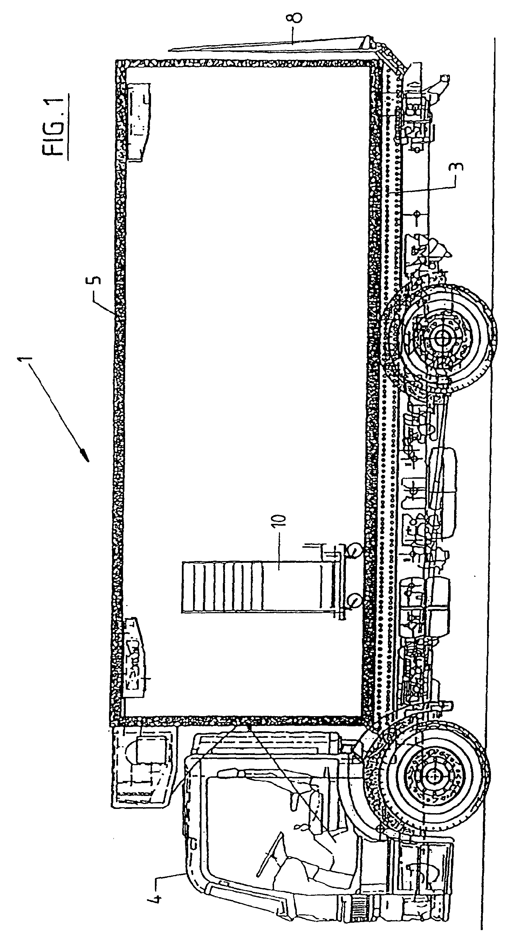

- Fig. 1: und 2 einen als Kühlfahrzeug ausgebildeten Lkw bzw. Motorwagen in Seitenansicht sowie in Draufsicht und geschnitten;

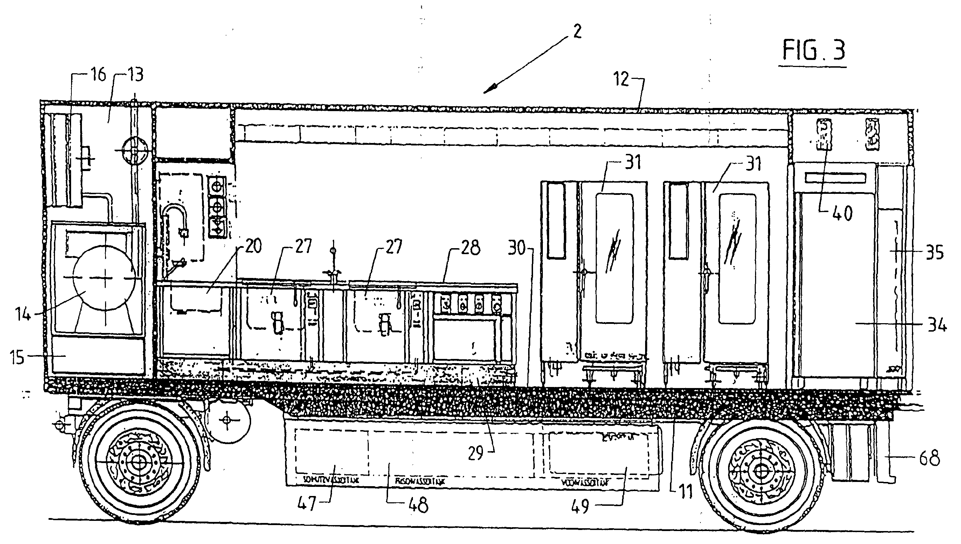

- Fig. 3: und 4 in Seitenansicht und im Längsschnitt sowie im Grundriß einen als mobile Küche ausgebildeten Anhänger gemäß der Erfindung;
- Fig. 5: eine Darstellung der Lüftungs- und Entlüftungsdecke des Anhängers;

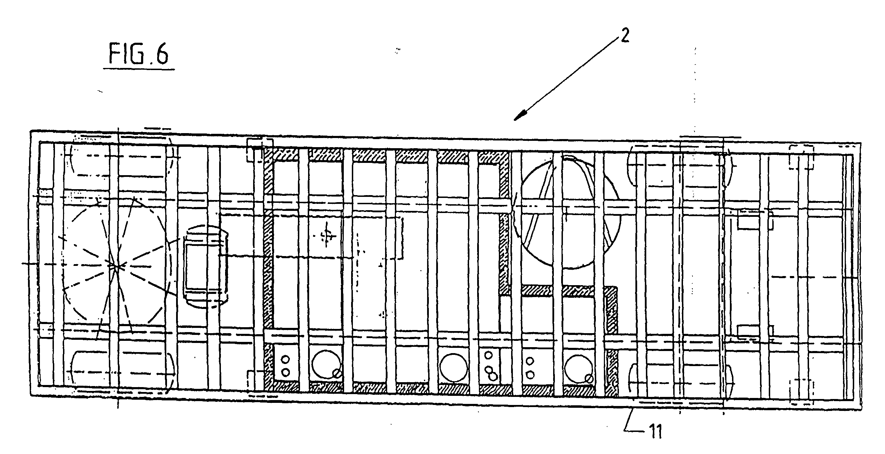

- Fig. 6: eine Darstellung des unteren Rahmens des Anhängers zur Erläuterung des Rahmenaufbaus und der Anordnung der Wassertanks;
- Fig. 7: in vereinfachter Darstellung die Elektroversorgung der Geräte des Anhängers der Figuren 3 und 4 und eine Einrichtung zur Temperatur- und Garzeiterfassung;
- Fig. 8: in vereinfachter Darstellung und im Schnitt eine Kammer des Aufbaus des Motorfahrzeugs zusammen mit einer Trennstange;
- Fig. 9: in vergrößerter Teildarstellung und im Schnitt ein Ende der Trennstange der Figur 8;
- Fig.10: eine Teillänge einer Lochleiste für die Trennstange.

Das von dem Zug- oder Motorfahrzeug 1 und dem Anhänger 2 gebildete Fahrzeuggespann dient zur mobilen Einsatzverpflegung einer größeren Anzahl von Personen, beispielsweise zur Einsatzverpflegung von Ordnungs- oder Polizeikräften bei einem mobilen Einsatz außerhalb des üblichen Standortes, und zwar insbesondere, aber nicht ausschließlich, mit vorgefertigter und gekühlter Nahrung.

Der bei der dargestellten Ausführungsform zweiachsige Lkw 1 ist hierfür als Kühlfahrzeug ausgebildet und weist auf einem Fahrzeugrahmen 3 hinter der Fahrerkabine 4 einen geschlossenen Aufbau 5 auf, dessen Innenraum bei der dargestellten Ausführungsform in drei sich über die gesamte Längsrichtung des Aufbaus 5 erstreckende Kammern 6 unterteilt ist, die jeweils gegeneinander sowie auch nach außen hin wärmeisoliert sind. Die Kammern 6, die jeweils über eigene Türen oder Klappen 7 an der Rückseite des Lkws 1 zugänglich sind, und zwar über eine dortige für sämtliche Kammern 6 gemeinsame Hebebühne 8, sind individuell kühlbar, und zwar über eigenen Verdampfer 9. Zur Erhöhung der Sicherheit sind für jede Kammer 6 zwei Verdampfer 9 zweier unabhängiger Kühlaggregate vorhanden. Insgesamt sind also sechs Verdampfer vorgesehen, die individuell gesteuert werden können und zwei unabhängige Kühlaggregate, die jeweils mit drei Verdampfern zusammenwirken und von denen ein Kühlaggregat an der Vorderseite des Aufbaus 5 über der Fahrerkabine 4 und ein Kühlaggregat als Unterfluraggregat unter dem Rahmen bzw. Aufbau vorgesehen ist.

Die Kammern 6 sind so bemessen, daß in jeder Kammer 6 eine Vielzahl von Regalwagen 10 Platz findet, die in dieser Kammer in Fahrzeuglängsrichtung aneinander anschließen und die mit mehreren Etagen zur Aufnahme von mit Speisen beschickten Gastronorm-Behältern ausgebildet sind.

Durch die Unterteilung des Aufbaus 5 in mehrere Kammern 6 ist es möglich, diese Kammer bei der jeweiligen Fahrt unterschiedlich zu nutzen, und zwar beispielsweise eine Kammer 6 oder aber zwei Kammern 6 zum Transportieren von frischen Speisen und zwei Kammern 6 oder aber eine Kammer 6 zum Rücktransportieren von unreinen Regalwagen 10, verschmutztem Geschirr usw. vom Einsatzort an eine stationäre Großküche.

Mit der Kühlung sind die einzelnen Kammern individuell in der Temperatur regelbar, und zwar für das Transportieren von frischen Speisen beispielsweise auf eine Temperatur zwischen 0 und 3°C, während beim Rücktransportieren von Regalwagen 10, verschmutztem Geschirr usw. die Kühlung der hierfür verwendeten Kammer 6 abgeschaltet ist.

Außerdem ist es möglich, z. B. in zwei Kammern 6 die Speisen rein bei einer Temperatur von 0 - 3°C gekühlt und z. B. in einer Kammer 6 sonstige verpackte Lebensmittel oder Getränke im Bereich unrein bei einer Temperatur von ca. 8 - 10°C zu transportieren.

Durch die Trennung der einzelnen Kammern ist trotz unterschiedlicher Verwendung dieser Kammern die für die Hygiene unerläßliche Trennung zwischen Rein und Unrein gewährleistet.

Der ebenfalls zweiachsige Anhänger 2, der mittels einer nicht dargestellten Anhängerdeichsel an den Lkw 1 ankuppelbar ist, weist auf seinem Anhängerrahmen 11 einen Aufbau 12 auf, in dem eine völlig autark arbeitende Zubereits- und Regenierküche untergebracht ist, und zwar wiederum in der Weise, daß eine konsequente Trennung zwischen reinen und unreinen Bereichen eingehalten ist.

In einer getrennten Kammer 13 des Aufbaus 12, die (Kammer) sich an der Vorderseite des Anhängers 2 befindet, ist ein Dieselaggregat 14 untergebracht, welche im wesentlichen aus einem Dieselmotor und aus einem von diesem angetriebenen Drehstromgenerator mit einer Leistung von beispielsweise 115 KVA besteht, und zwar zum Betrieb der elektrischen Geräte, insbesondere der Kochgeräte, sowie der Beleuchtung mit der üblichen Netzspannung von 230 V. Unter dem Dieselaggregat 14 befindet sich in der Kammer 13 auch ein Tank 15 für den Treibstoff zum Betrieb des Dieselmotors. Oberhalb des Aggregates 14 ist in der Kammer 13 ein Kühler 16 vorgesehen, der über ein nicht dargestelltes Gebläse mit Außenluft gekühlt wird.

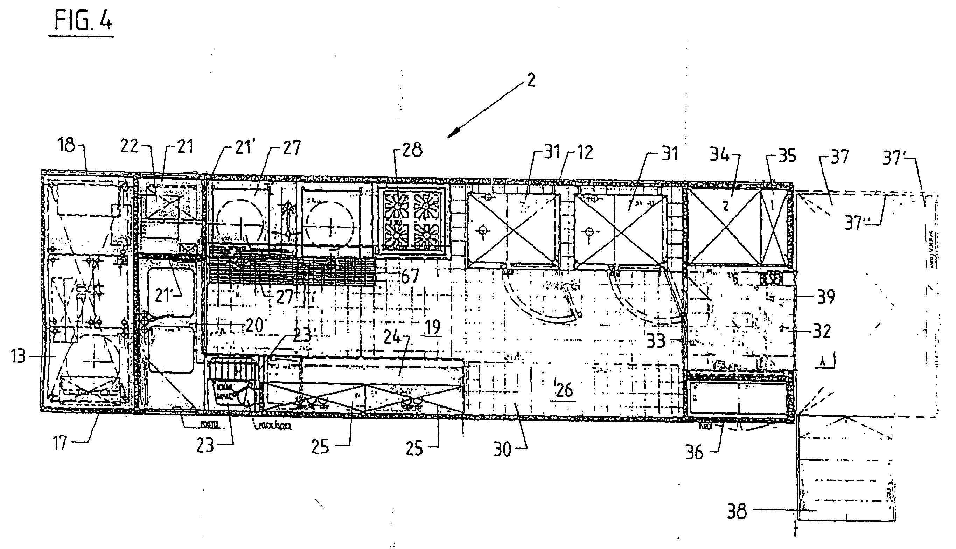

Für diese Kühlerluft ist an einer Längsseite des Anhängers bzw. des Aufbaus 12 ein Lufteinlaß 17 vorgesehen. Bei der dargestellten Ausführungsform befindet sich dieser Lufteinlaß 17 an der in Vorwärtsfahrtrichtung linken Seite des Anhängers, d. h. bei der Darstellung der Figur 4 unten. An der gegenüberliegenden Längsseite des Aufbaus ist ein entsprechender Luftauslaß 18 vorgesehen. Die Kammer 13, die auch gegenüber dem übrigen Innenraum des Aufbaus 12 sowie nach außen hin schallgedämmt ist, ist lediglich von der Außenseite des Anhängers her über entsprechende Klappen oder Türen zugänglich.

An die Kammer 13 anschließend ist im Innenraum des Aufbaus 12 ein Küchenraum 19 gebildet. An der Wand, die die Kammer 13 von dem Küchenraum 19 trennt, ist ein Spültisch 20 mit einem Hahn für kaltes und warmes Wasser sowie mit einer Brause vorgesehen. Dieser Spültisch 20 erstreckt sich ausgehend von der in der Figur 4 unteren Außenwand, an der auch der Lufteinlaß 17 vorgesehen ist, in Richtung zur gegenüberliegenden Außenwand und endet an der Begrenzungswand 21' einer Kammer 21, in der eine Warmwasseraufbereitung in Form eines Durchlauferhitzers 22 untergebracht ist, der beispielsweise elektrisch betätigt wird und/oder aber über die Abwärme des Dieselmotors des Aggregates 14. Die Kammer 21 ist ebenfalls gegenüber dem Küchenraum 19 verschlossen und nur von der Außenseite des Anhängers 2 zugänglich.

An den Spültisch 20 schließt sich entlang der in der Figur 4 unteren Längsseite des Anhängers zunächst ein Handwaschbecken 23 mit berührungsloser Armatur und Ausguß und daran ein Arbeitstisch 24 mit verschiedenen Schubläden und über dem Arbeitstisch angebrachten Wandschränken 25 an. Auf diese Arbeitstisch- und Wandschrankkombination folgt ein Stauraum 26, in dem mehrere Förder- oder Regalwagen 10 abgestellt werden können.

Entlang der gegenüberliegenden Längsseite des Anhängers sind auf die Kammer 21 bzw. die Trennwand 21' folgend zwei Schnellkochkessel 27 und 28 vorgesehen und auf diese folgend ein elektrisch betriebener Herd 28 mit einem Keramik-Kochfeld oder Ceran-Kochfeld. Der Spültisch 20, das Handwaschbecken 23 bzw. der dieses Handwaschbecken aufweisende Unterschrank, der die Arbeitsplatte bildende Unterschrank 24, die Schnellkochkessel 27 und der Herd 28 sind aus hygienischen Gründen bündig auf einem geschlossenen Sockel 29 angeordnet, und zwar auf einem Niveau etwas oberhalb des Niveaus des übrigen Bodens des Küchenraumes 19. Durch dieses Sockel 29, in dem auch Versorgungs- und Entsorgungsleitungen, d. h. insbesondere die elektrischen Leitungen für die elektrisch betriebenen Geräte, die Leitungen für das Zuführen von warmen und kalten Wasser und Weichwasser sowie die Abwasserleitungen des Spültisches 20 und des Handwaschbeckens 21 verlegt sind, ist ein zuverlässiges und hygienisches Reinigen des Küchenraumes 19 im Bereich des Bodens 30 möglich, der rutschfest ausgebildet ist. Dem Stauraum 26 gegenüberliegend und auf den Herd 28 folgend sind zwei Heißluftdämpfer 31 vorgesehen, in die jeweils ein Regalwagen 10 eingeschoben werden kann, um die von diesem Wagen aufgenommenen Speisen zu erhitzen.

An den Küchenraum 19 schließt sich zur Rückseite des Anhängers ein Raum 32 an, der durch eine Tür, beispielsweise eine automatisch öffnende Tür 33 von dem Küchenraum 19 getrennt ist und in dem an der in der Figur 4 oberen Längsseite des Anhängers ein Umluftkühlschrank 34 sowie der Rückseite des Anhängers unmittelbar benachbart ein Einbauschrank 35 vorgesehen sind. An der gegenüberliegenden Seite ist der Vorraum 32 durch eine Wandung von einer Kammer 36 getrennt, die zur Aufnahme von Abfallbehältern oder Gastronorm-Behältern für Speiseabfälle dient und die aus hygienischen Gründen nur von der Außenseite des Aufbaus her zugänglich ist.

An der Rückseite des Anhängers 2 ist eine Hebebühne 37 vorgesehen, die im ausgeklappten Zustand eine horizontale Plattform bildet, welche über eine ausklappbare Treppe 38 erreichbar ist und über die durch eine Tür 39 der Vorraum 32 erreichbar ist. Die Hebebühne ist mit einem Abrollschutz 37' versehen, der verhindert, daß Regalwagen 10 über den rückwärtigen Rand der Hebebühne bzw. der horizontalen Plattform rollen können. Weiterhin ist eine Wetterschutzplane 37" für die Hebebühne 37 vorgesehen. Die Treppe 38 ist mit steckbaren Geländern versehen und kann für den Transport auf die Innenseite der Hebebühne geklappt werden.

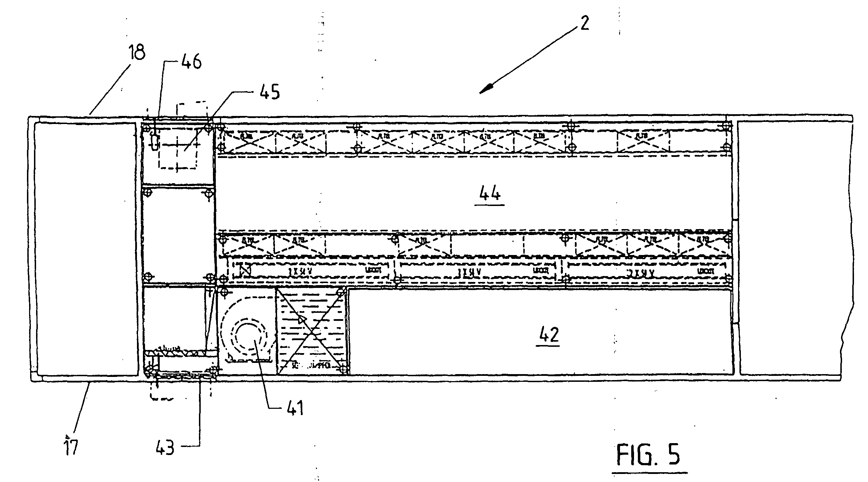

In der Decke des Vorraumes 32 befinden sich zwei elektrisch betriebene Insektenvernichter 40. Zur Belüftung des Küchenraumes 19 ist eine Lüftungsdecke vorgesehen (Fig. 5), die einen Zuluftventilator 41 mit Schalldämpfer und mit einer elektrischen Einrichtung zum Beheizen der Luft aufweist. Der mit entsprechenden Filtern ausgestattete Luftaustritt 42 dieser Lüftungsdecke verläuft bei der dargestellten Ausführungsform entlang der in der Figur 4 unteren Längsseite des Aufbaus 12. Der Lufteintritt 43 der Belüftungsdecke befindet sich ebenfalls an dieser Längsseite. An der anderen Längsseite ist in der Decke des Küchenraumes 19 oberhalb der Schnellkochkessel 27, des Herdes 28 und der beiden Heißtluftdämpfer 31 der Abluftbereich 44 der Lüftungsdecke vorgesehen, der über einen Abluftventilator 45 mit Schalldämpfer die Abluft an einen Abluftauslaß 46 fördert, der an der in der Figur 4 oberen Längsseite des Aufbaus vorgesehen ist, und zwar dort, wo auch der Auslaß 18 der Motorkühlung vorgesehen ist. Der Lufteintritt 43 sowie der Luftauslaß 46 können motorisch geöffnet und geschlossen werden, beispielsweise unter Verwendung einer elektrisch betätigbaren Klappe.

Unterhalb des Rahmens 11 befinden sich thermisch isoliert und damit insbesondere auch frostgeschützt mehrere Tanks, und zwar ein Schmutzwassertank 47 zur Aufnahme von Schmutzwasser, ein Frischwassertank 48 zur Aufnahme von Frischwasser und ein Weichwassertank 49, d. h. ein Tank zur Aufnahme von entkalktem oder im wesentlichen entkalktem Wasser für den Betrieb der Dampferzeuger der Heißtluftdämpfer 31.

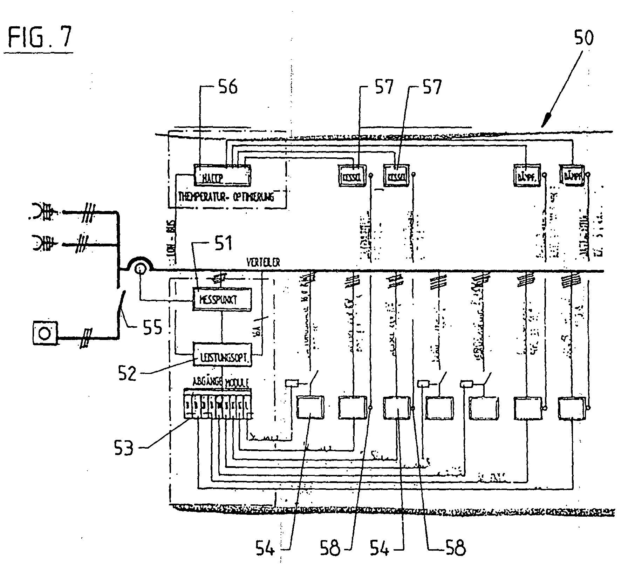

Zur optimalen Steuerung bzw. Verteilung der vorhandenen elektrischen Energie auf die einzelnen Geräte weist die in der Figur 7 allgemein mit 50 bezeichnete Elektroversorgung des Anhängers 2 eine Meßschaltung 51 auf, die den aktuellen elektrischen Verbrauch sämtlicher Geräte bzw. Verbraucher des Anhängers mißt und eine Einrichtung 52 zur Leistungsoptimierung ansteuert, die über ihr Anschlußmodul 53 bzw. über dortige Ausgänge die einzelnen, in der Figur mit 54 bezeichneten Verbraucher bzw. Geräte nach einem vorgegebenen Programm derart steuert, daß eine optimale Nutzung der durch das Aggregat 14 zur Verfügung gestellten Leistung möglich ist. Die Elektroversorgung weist auch einen Umschalter 55 auf, über den die Elektroversorgung 50 von dem Aggregat 14 auf eine externe Versorgung umgestellt werden kann, sofern eine solche am Einsatzort vorhanden ist.

Mit 56 ist in der Figur eine Einrichtung bezeichnet, die zur Dokumentation der Temperatur des Zeitverlaufs dient und zur Überwachung und Aufzeichnung von Temperatur-Soll- und Istwerten sowie der Garzeit verwendet wird. Die Einrichtung 56 ist hierfür über Temperatur-Module 57 mit Temperatursensoren 58 an den Kochkesseln 27 und den Heißluftdämpfern 31 verbunden. Die von den Temperatursensoren 58 bzw. den Modulen 57 gelieferten Teperaturmeß-Daten werden in der Einrichtung 56 zusammen mit der jeweiligen Gar- oder Kochzeit für Dokumentationszwecke gespeichert, und zwar beispielsweise über einen Zeitraum von beispielsweise 365 Tagen.

Die Elektroversorgung 50 mit der Meßvorrichtung 51, mit der Vorrichtung zur Leistungsoptimierung und mit dem Anschlußmodul 53 ist ebenso wie die Einrichtung 56 in der auch als Installationsraum dienende Kammer 21 untergebracht.

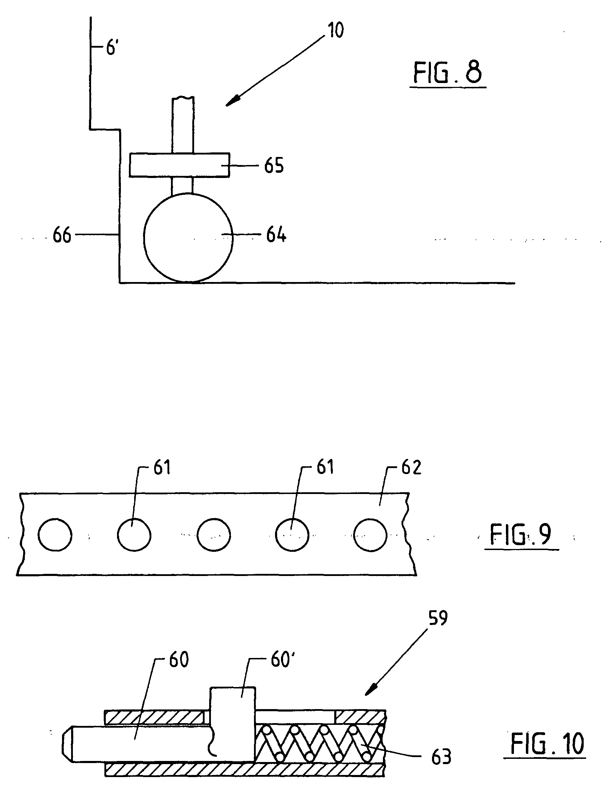

Um die Regal- bzw. Hordenwagen in der jeweiligen Kammer 6 des Motorfahrzeugs 1 zu sichern, ist für jede Kammer 6 wenigstens eine Sicherungs- oder Trennstange 59 vorgesehen, die in horizontaler Richtung quer zur Längserstreckung der jeweiligen Kammer 6 in den dortigen Wandungen 6' verankert werden kann, wie dies in der Figur 8 sehr vereinfacht für ein Ende der Trennstange 59 angedeutet ist. Die Trennstange 59 ist für diesen Zweck an beiden Enden mit jeweils einem Zapfen 60 versehen, der in Löchern 61 einer Lochreihe 62 eingeführt und dort verankert werden kann. An den einander zugewandten Seiten der die jeweilige Kammer 6 begrenzenden Wandungen 6' ist jeweils eine Lochreihe 62 in horizontaler Richtung vorgesehen. Jede, beispielsweise von einem in die Wandung 6' eingelassene Metallprofil gebildete Lochreihe 62 an einer Wandung 6' liegt mit ihren Löchern 61 den entsprechenden Löchern 61 der an der anderen Wandung 6' vorgesehenen Lochreihe in horizontaler Richtung und quer zur Kammer 6 unmittelbar gegenüber.

Um ein Einrasten der Zapfen 60 in die Löcher 61 zu ermöglichen, ist zumindest an einem Ende der Trennstange 59 der dort vorgesehene Zapfen 60 mittels einer Druckfeder 61 in axialer Richtung gefedert und zum Lösen der Trennstange 59 über einen radial von der Trennstange 59 wegstehenden Griff oder Knopf 60' betätigbar.

Die in einer Kammer 6 angeordneten Regalwagen 10 schließen in dieser Kammer ausgehend von dem vorderen Ende des Aufbaus 5 aneinander an, und zwar mit einem an der Unterseite jeweils oberhalb der Rollen oder Räder 64 vorgesehenen Abweiser 65. Am vorderen Ende des Aufbaus 5 sowie an den Wandungen 6' ist Rammschutz 66 vorgesehen, der eine Anlage für die Abweiser 65 der Regalwagen 10 bildet. Der letzte, vom vorderen Ende des Aufbaus 5 am weitesten entfernte Regalwagen 10 wird durch die Trennstange 59 fixiert, so daß sämtliche Regalwagen 10 gegen unerwünschtes hin- und Herrollen gesichert sind.

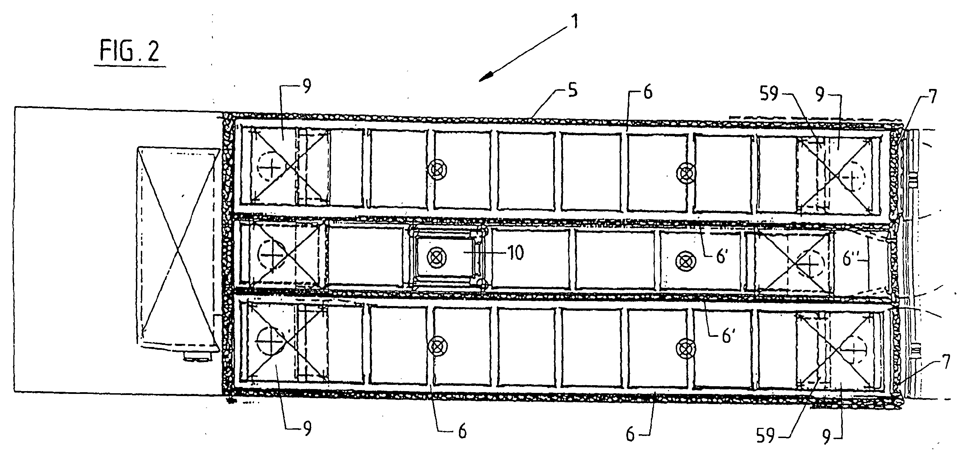

Wie in der Figur 2 mit 6" angedeutet ist, sind die innenliegenden Wandungen bzw. Trennwandungen 6' zwischen den äußeren Kammern 6 und der inneren Kammer 6 am rückwärtigen Ende des Aufbaus 5 schwenkbar ausgebildet, so daß das Ein- und Ausfahren der Regelwagen 10 in die beiden äußeren Kammern 6 bei nach innen geschwenkten Wandabschnitten 6" erleichtert wird.

Mit 67 ist in der Figur 4 noch eine durch ein Gitter abgedeckte Bodenrinne bezeichnet, die sich bei der dargestellten Ausführungsform vor dem Schnellkochkesseln erstreckt und Abläufe mit Geruchsverschluß aufweist.

Durch eine Nivilliereinrichtung kann der Rahmen 11 und damit auch der Aufbau 12 des im Gelände abgestellten Anhängers 2 exakt ausgerichtet werden, so daß alle horizontalen und vertikalen Achsen und Ebenen des Anhängers tatsächlich auch in der Horizontalen bzw. Vertikalen orientiert sind. Die Nivilliereinrichtung ist im einfachsten Fall von manuell betätigbaren Spindelwinden gebildet, von denen in der Figur 4 eine mit 68 angedeutet ist.

Die Erfindung wurde voranstehend an einem Ausführungsbeispiel beschrieben. Es versteht sich, daß zahlreiche Änderungen sowie Abwandlungen möglich sind, ohne daß dadurch der der Erfindung zugrundeliegende Erfindungsgedanke verlassen wird.

### Bezugszeichenliste

- 1: Motorfahrzeug bzw. Lkw
- 2: Anhänger
- 3: Rahmen des Motorfahrzeugs
- 4: Fahrerhaus
- 5: geschlossener Aufbau
- 6: Kammer
- 6': Wandung
- 6": Wandabschnitt
- 7: Tür
- 8: Hebebühne
- 9: Kühler bzw. Verdampfer eines Kühlaggregates
- 10: Regal- oder Hordenwagen
- 11: Rahmen des Anhängers
- 12: geschlossener Aufbau des Anhängers
- 13: Kammer oder Raum für das elektrische Versorgungsaggregat
- 14: Aggregat
- 15: Tank für Motorkraftstoff
- 16: Motorkühler
- 17: Kühllüfteinlaß
- 18: Kühlluftauslaß
- 19: Kücheninnenraum
- 20: Spültisch
- 21: Kammer
- 22: Durchlauferhitzer
- 23: Handwaschbecken mit Ausguß
- 24: Arbeitstisch
- 25: Wandschrank
- 26: Stauraum
- 27: Schnellkochkessel
- 28: Herd
- 29: Sockel, Aufstellsockel
- 30: rutschfester Boden
- 31: Heißluftdämpfer
- 32: Vorraum
- 33: Tür
- 34: Umluftkühlschrank
- 35: Schrank
- 36: Kammer für Abfallbehälter bzw. Außenfach für Speiseabfälle
- 37: Hebebühne
- 37': Abrollschutz
- 37": Wetterschutzplane
- 38: Treppe mit steckbaren Geländern
- 39: Tür
- 40: Insektenvernichter
- 41: Zuluftventilator mit Luftfilter und Schalldämpfer
- 42: Luftaustritt
- 43: Frischlufteintritt
- 44: Abluftbereich
- 45: Abluftventilator mit Schalldämpfer
- 46: Abluftaustritt
- 47: Schmutzwassertank
- 48: Frischwassertank
- 49: Weichwassertank
- 50: Elektroversorgung
- 51: Meßvorrichtung
- 52: Vorrichtung zur Leistungsoptimierung
- 53: Anschlußmodule
- 54: Verbraucher bzw. Gerät
- 55: Umschalter für externen/internen Betrieb
- 56: Überwachungs- und Dokumentationseinheit
- 57: Temperaturmodul
- 58: Temperatursensor
- 59: Trennstange
- 60: Zapfen
- 60': Knopf
- 61: Loch
- 62: Lochreihe
- 63: Druckfeder
- 64: Rolle oder Rad des Regal- oder Hordenwagens
- 65: Abweiser am Regel- oder Hordenwagen
- 66: Rammschutz
- 67: Bodenrinne
- 68: Spindelwinde der Nivelliereinrichtung

## Patentansprüche

1. Mobile Kücheneinheit für eine Einsatzverpflegung, **gekennzeichnet durch** einen mobilen bzw. auf einem Fahrzeug oder Anhängerrahmen vorgesehenen Aufbau (12), in dem wenigstens ein Küchenraum (19) mit verschiedenen, elektrisch betriebenen Geräten (27, 28, 31, 34, 22) gebildet sind.

2. Kücheneinheit nach Anspruch 1, **dadurch gekennzeichnet, daß** im Aufbau (12) ein vom Küchenraum (19) getrennter Raum (13) gebildet sind, in dem ein von einem Motor betriebenes Aggregat (14) zur Stromerzeugung untergebracht ist,
wobei der das Aggregat (14) zur Stromerzeugung aufnehmende Raum (13) vorzugsweise an einer dem Zugang zum Küchenraum (19) gegenüber liegenden Seite, beispielsweise an der Vorderseite des Anhängers (2) vorgesehen ist, und/oder
wobei beispielsweise in dem das Aggregat (14) zur Stromerzeugung aufnehmenden Raum (13) zugleich auch ein Tank für den Treibstoff (15) des Aggregates untergebracht ist.

3. Kücheneinheit nach Anspruch 1 oder 2, **dadurch gekennzeichnet, daß** der Küchenraum (19) vorzugsweise über eine eine Plattform bildende Hebebühne (37) und/oder über einen Vorraum (32) von der Rückseite des Anhängers (2) her zugänglich ist.

4. Kücheneinheit nach einem der vorhergehenden Ansprüche, **gekennzeichnet durch** eine Kühlung für das Aggregat zur Stromerzeugung mit einem an einer ersten Längsseite des Anhängers vorgesehenen Lufteinlaß (17) und mit einem an der gegenüberliegenden zweiten Längsseite des Anhängers vorgesehenen Luftauslaß,
und/oder
**durch** eine Belüftung, vorzugsweise in Form einer Belüftungsdecke zumindest für den Küchenraum (19), wobei die Belüftung einen Lufteinlaß (43) aufweist, der an der ersten Längsseite des Anhängers vorgesehen ist,
und/oder
**durch** eine Entlüftung (44) zumindest für den Küchenraum (19) mit einem Gebläse oder Ventilator (45) und einer Abluftöffnung (46), wobei die Abluftöffnung (46) an der zweiten Längsseite des Anhängers (2) vorgesehen ist.

5. Kücheneinheit nach einem der vorhergehenden Ansprüche, **dadurch gekennzeichnet, daß** die elektrischen Geräte zusätzlich zu einer Kühlung (34) zumindest einen Schnellkochkessel (27), einen Herd (28) sowie einen Heißluftdämpfer (31) zum Erhitzen gekühlter Speisen aufweisen.

6. Kücheneinheit nach einem der vorhergehenden Ansprüche, **dadurch gekennzeichnet,**
**daß** die elektrischen Geräte (27, 28, 31) an einer gemeinsamen Längsseite, vorzugsweise an der zweiten Längsseite des Anhängers vorgesehen sind, und/oder
**daß** den elektrischen Geräten (27, 28, 31) gegenüberliegend an der anderen Längsseite des Anhängers Arbeitsbereiche sowie wenigstens ein Spülbecken vorgesehen sind,
und/oder
**daß** dem wenigstens einem Heißluftdämpfer (31) an der anderen Längsseite des Anhängers gegenüberliegend ein Stauraum (26) zum Abstellen wenigstens eines Regalwagens (10) vorgesehen ist,
und/oder
**daß** zwischen den Arbeitsbereichen bzw. Arbeitstischen und einem anschließenden Spülbecken (23) eine Trennwandung (23') zwischen Rein und Unrein gebildet ist.

7. Kücheneinheit nach einem der vorhergehenden Ansprüche, **dadurch gekennzeichnet, daß** in dem Küchenraum (19) an einer diesen Küchenraum von dem Aggregat (14) trennenden Wand quer zur Längsrichtung des Anhängers ein Spültisch (20) vorgesehen ist, und daß der Spültisch durch Wandungen (21') von benachbarten elektrischen Kocheinrichtungen (27) getrennt ist,
wobei beispielsweise die Wandung (21') eine geschlossene Kammer (21) begrenzt, in der eine Warmwasseraufbereitung vorgesehen ist.

8. Kücheneinheit nach einem der vorhergehenden Ansprüche, **dadurch gekennzeichnet, daß** zumindest ein Teil der Kochgeräte (27, 28), Spültische, Ausgüsse und/oder Arbeitstische bildende Einheiten auf einem Sockel (29) oberhalb des Niveaus des Bodens (30) des Küchenraumes (19) angeordnet sind, und daß in dem Sockel (29) Anschlußleitungen verlegt sind.

9. Kücheneinheit nach einem der vorhergehenden Ansprüche, **gekennzeichnet durch** eine von dem Küchenraum (19) und/oder dem Vorraum (32) getrennte und nur an der Außenseite zugängliche Kammer zur Unterbringung von Speiseresten,
und/oder
**durch** an der Unterseite des Anhängerrahmens (11) wärmeisoliert und frostgeschützt vorgesehene Tanks (47, 48, 49) zur Aufnahme von Schmutzwasser, Frischwasser und Weichwasser,
und/oder
**durch** eine Elektroversorgung (50) mit einer Einheit (52) zur Leistungsoptimierung, die (Einheit) in Abhängigkeit von einem gemessenen Verbrauch und unter Berücksichtigung der Leistung des Aggregats (14) sowie unter Berücksichtigung der Priorität einzelner elektrischer Verbraucher diese zu- bzw. abschaltet,
und/oder
**durch** eine Einrichtung (56) zur Dokumentation von Temperatur und Garzeit,
und/oder
**durch** eine Nivilliereinheit (68).

10. Fahrzeugeinheit für eine Einsatzverpflegung, **gekennzeichnet durch** ein zum Fahren auf Straßen geeignetes Motorfahrzeug (1) sowie **durch** einen an das Motorfahrzeug ankuppelbaren Anhänger (2), nach einem der vorhergehenden Ansprüche,
wobei beispielsweise das Motorfahrzeug als Kühlfahrzeug ausgebildet ist und der Anhänger (2) als mobile Kücheneinheit ausgebildet sind, und/oder
beispielsweise das Motorfahrzeug (1) einen geschlossenen Aufbau (5) aufweist, der in mehrere, voneinander getrennte Kammern (6) unterteilt ist, die über wenigstens ein Kühlaggregat (9), vorzugsweise wenigstens zwei unabhängige Kühlaggregate mit jeweils wenigstens einem Verdampfer (9) für jede Kammer (6) individuell kühlbar sind.

11. Fahrzeugeinheit nach Anspruch 11, **dadurch gekennzeichnet,**
**daß** die Kammern (6) zur Unterbringung fahrbarer Regalwagen (10) ausgebildet sind, und/oder
**daß** die Kühlkammern (6) jeweils an der Rückseite des Motorfahrzeugs über eigene Türen (7) zugänglich sind, und/oder
**daß** wenigstens eine Sicherungs- oder Trennstange (59) für jede Kammer (6) des Anhängers (2) des Motorfahrzeugs vorgesehen ist.
